(19) Europäisches Patentamt / European Patent Office / Office européen des brevets

(11) **EP 3 311 912 A1**

(12) **EUROPEAN PATENT APPLICATION**
published in accordance with Art. 153(4) EPC

(43) Date of publication:
**25.04.2018 Bulletin 2018/17**

(51) Int Cl.:
**B01J 20/20** (2006.01)    **B01J 20/28** (2006.01)
**B01J 20/30** (2006.01)    **F17C 11/00** (2006.01)

(21) Application number: **16811680.4**

(22) Date of filing: **16.06.2016**

(86) International application number:
**PCT/JP2016/067867**

(87) International publication number:
**WO 2016/204206 (22.12.2016 Gazette 2016/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.06.2015 JP 2015122814**

(71) Applicant: **Kansai Coke And Chemicals Co., Ltd. Hyogo 661-0976 (JP)**

(72) Inventors:
• **TSUKAZAKI, Takaki**
  **Amagasaki-shi**
  **Hyogo 660-0095 (JP)**
• **TENNO, Kojiro**
  **Amagasaki-shi**
  **Hyogo 660-0095 (JP)**
• **YASUMARU, Junichi**
  **Amagasaki-shi**
  **Hyogo 660-0095 (JP)**

(74) Representative: **Müller-Boré & Partner Patentanwälte PartG mbB Friedenheimer Brücke 21 80639 München (DE)**

(54) **ACTIVATED CARBON MOLDED BODY, METHOD FOR MANUFACTURING ACTIVATED CARBON MOLDED BODY, AND ABSORBENT MATERIAL AND STORAGE MATERIAL USING ACTIVATED CARBON MOLDED BODY**

(57) Provided are: an activated carbon molded body which has a large pore volume and has the strength to allow a desired shape to be molded therefrom; and a method for manufacturing the same. This activated carbon molded body has a pore volume per molded body volume ($cm^3/cm^3$) obtained from the product of the total pore volume ($cm^3/g$) of the activated carbon molded body and the molded body density ($g/cm^3$) of 0.39 $cm^3/cm^3$ or greater, and a strength of 0.1 MPa or greater.

[FIG.1]

EP 3 311 912 A1

**Description**

FIELD OF THE INVENTION

The present invention relates to activated carbon molded body, method for manufacturing activated carbon molded body, and adsorbent material and storage material using activated carbon molded body.

BACKGROUND ART

Activated carbon is used widely as various adsorption materials due to its large specific surface area and its developed pore structure. For example, it is used in various liquid phase treatments such as water cleaning treatment, and various gas phase treatments such as deodorization treatment and air cleaning treatment. Moreover, focusing on the property of activated carbon of possessing conductivity or an electron-donating/accepting function or the property that a catalyst can be supported in a highly dispersed state on the surface in pores of activated carbon, it is used as a material for electrodes, such as carbon electrodes for electric double-layer capacitors and carbon electrodes for cells such as fuel cells, air cells, and lithium ion batteries. Furthermore, in recent years, activated carbon attracts attention also as a material for energy storage, such as hydrogen storage or methane storage.

Activated carbon is used in various shapes, such as powdery activated carbon, granular activated carbon, and fibrous activated carbon; for example, powdery activated carbon is prone to cause clogging and its effect on the human body caused by its dust has been disputed. On the other hand, granular activated carbon or fibrous activated carbon cannot afford a sufficient molded body density. Thus, activated carbon molded bodies prepared by mixing activated carbon with a binder and then processing into an arbitrary shape have been proposed.

For example, Patent Document 1 discloses a hydrogen storage body prepared by mixing a carbon material having a specific surface area of 1000 $m^2/g$ or more and a molded body density of 0.4 $g/cm^3$ or more and 1 $g/cm^3$ or less with 10% by mass or less of a binder such as polytetrafluoroethylene. According to this technology, since both the specific surface area and the molded body density of the carbon material are large, an increased hydrogen storage capacity per unit volume can be achieved.

Patent Document 2 discloses an adsorbent molded body having a thin coat layer of polyolefin on the surface of an adsorbent, wherein the polyolefin is a polyolefin having viscosity properties specified by a melt flow rate of 1 g/10 minutes or less. According to this technology, problems such as that hands are polluted when the hands touch the molded body or that black dust is generated from wearing are prevented and contact of the adsorbent with an aqueous solution is developed well and a function as an adsorbent can fully be exerted.

Moreover, Patent Document 3 discloses a method of manufacturing an activated carbon molded body characterized by mixing granular or powdery activated carbon with two or more organic polymer binders differing in melt index, filling the resulting mixture into a mold, followed by molding by heating and pressing. According to this technology, the activated carbon molded body has sufficient strength and exhibits low water flow resistance, and has an enhanced harmful substance removal capability.

PRIOR ART DOCUMENTS

PATENT DOCUMENTS

Patent document 1: Japanese Unexamined Patent Application Publication No.2003-38953A1
Patent document 2: Japanese Unexamined Patent Application Publication No. 2000-263040A1
Patent document 3: Japanese Unexamined Patent Application Publication No. 2005-119902A1

SUMMARY OF THE INVENTION

PROBLEMS TO BE SOLVED BY THE INVENTION

In order to improve the adsorption performance and the storage performance of an activated carbon molded body, it is desirable to increase the pore volume of the activated carbon molded body. On the other hand, in order to mold activated carbon into a desired shape, it is necessary to increase strength by adding a binder, but there is a problem that the specific surface area or the pore volume of the activated carbon is reduced if the binder content is increased.

The present invention was developed with a focus on circumstances such as those described above, and an object thereof is to provide an activated carbon molded body which has a large pore volume and has strength to allow a desired shape to be molded therefrom; and a method for manufacturing the same.

SOLUTIONS TO THE PROBLEMS

The gist of the activated carbon molded body of the present invention that could solve the above-mentioned problem is that the pore volume per molded body volume ($cm^3/cm^3$) obtained from the product of the total pore volume ($cm^3/g$) of the activated carbon molded body and the molded body density ($g/cm^3$) (hereinafter referred to as " pore volume per molded body volume ") is 0.39 $cm^3/cm^3$ or more, and the strength of the activated carbon molded body is 0.1 MPa or more.

In a preferred embodiment of the above-mentioned activated carbon molded body, the specific surface area per molded body volume ($m^2/cm^3$) obtained from the product of the specific surface area ($m^2/g$) of the activated carbon molded body and the molded body density ($g/cm^3$) (hereinafter referred to as "specific surface area per molded body volume") is 810 $m^2/cm^3$ or more.

In another embodiment, the activated carbon molded body of the present invention is used as an adsorption material or a storage material.

The present invention further encompasses an activated carbon body obtainable by mixing an activated carbon obtained by subjecting a carbonaceous feed material to alkali-activation treatment with a polyolefin resin having an average particle diameter of 1 $\mu$m or more and 50 $\mu$m or less, and then subjecting the mixture obtained to pressing treatment. Isostatic pressing treatment is preferred as the pressing treatment.

It is another preferred embodiment that the activated carbon molded body contains the polyolefin resin in a content of 1% by mass or more and 25% by mass or less relative to the total of 100% by mass of the polyolefin resin and the activated carbon.

The method for manufacturing an activated carbon body of the present invention has a gist in that the method comprises mixing an activated carbon obtained by subjecting a carbonaceous feed material to alkali-activation treatment with a polyolefin resin having an average particle diameter of 1 $\mu$m or more and 50 $\mu$m or less, and then subjecting the mixture obtained to pressing treatment. Isostatic pressing treatment is preferred as the pressing treatment.

EFFECTS OF THE INVENTION

According to the present invention, it is possible to provide an activated carbon molded body which has a large pore volume and has a strength to allow a desired shape to be molded therefrom. Thus, if the activated carbon molded body of the present invention is used, an adsorption material excellent in adsorption properties or a storage material excellent in storage properties can be provided. In addition, according to the present invention, it becomes possible to easily manufacture an activated carbon molded body having the above-mentioned properties.

BRIEF DESCRIPTION OF THE DRAWINGS

Fig. 1 is a graph in which the relation of the pore volume per molded body volume ($cm^3/cm^3$) and the specific surface area per molded body volume ($m^2/cm^3$) of Examples is plotted.

Fig. 2 is a graph showing the strength of the molded bodies 8 and 15 of Examples.

MODE FOR CARRYING OUT THE INVENTION

The inventors of the present invention repeated intense study on activated carbon molded bodies in order to solve the above-described problems. First, it is necessary to consider the molded body density of an activated carbon molded bodies because activated carbon molded bodies have been pressure molded. Then, the inventors have accomplished the present invention by finding that an activated carbon molded body having a pore volume necessary for improving adsorption properties and storage properties which activated is required to have and a strength high enough for molding into a desired shape can be provided by adjusting the pore volume per molded body volume of the activated carbon molded body to 0.39 $cm^3/cm^3$ or more and the strength of the activated carbon molded body to 0.1 MPa or more.

Hereinafter, the circumstances leading to the above-mentioned activated carbon molded body of the present invention are described according to suitable manufacturing methods.

Since molding without adding a binder only allows activated carbon itself to be consolidated, it is difficult to mold activated carbon into a desired shape. For this reason, it is necessary to mold a mixture prepared by adding a binder to activated carbon and mixing them.

There are many binders known in the art and such binders vary in properties. As a result of examining binders, it was found that the activated carbon molded body of the present invention could be produced by using a polyolefin resin as a binder. When a polyolefin resin has a prescribed average particle diameter is used, an activated carbon itself is bound firmly by pressing treatment with a relatively low pressure without greatly decreasing the specific surface area or pore volume of the activated carbon.

It is noted that when another conventional binder, e.g., the polytetrafluoroethylene (PTFE) used in Patent Document 1 is used, a sufficiently high strength cannot be afforded because it is prone to powder though it can bound activated carbon itself due to its high viscoelasticity at room temperature. If there is used a thermoplastic resin which is low in melting point and completely melts at a temperature adjusted for pressing treatment, a molten resin is captured into pores, so that the number of adsorption sites will decrease.

When manufacturing an activated carbon molded body with adding a binder, the binder content is one of the strength determinants of the activated carbon molded body, and it is desirable to increase the binder content from the viewpoint of enhancing strength. However, the increase in the binder content is accompanied by decrease in specific surface area or pore volume. In order to obtain an activated carbon molded body being large in specific surface area or pore volume even if a binder is added, it is desirable that the activated carbon to be used have a specific surface area or pore volume as large as possible.

As a result of investigating activated carbon, it was found that as compared with use of water vapor-activated carbon, by mixing an alkali-activated carbon obtainable by subjecting a carbonaceous feed material to alkali-activation treatment with a prescribed binder specified in the present invention and then molding, an activated carbon molded body being larger in specific surface area or pore volume can be obtained. Especially, when using an alkali-activated carbon as the activated carbon of the present invention, it is possible to achieve a larger pore volume per molded body volume, and when using the molded body as an adsorption material or a storage material, it is possible to achieve a larger adsorption capacity or storage capacity per volume.

The present invention is described hereafter.

The activated carbon as used herein is a material obtainable by subjecting a carbonaceous feed material for use as a raw material to alkali-activation treatment. The types of activated carbon include: powdery activated carbon prepared by using sawdust, wood chips, charcoal, peat, etc. as a raw material; granular activated carbon prepared by using charcoal, coconut shell carbon, coal, oil carbon, phenol, etc. as a raw material; carbonaceous activated carbon prepared by using a carbonaceous material (petroleum coke, coal coke, petroleum pitch, coal pitch, coal tar pitch, composites thereof, etc.) as a raw material; and activated carbon fiber prepared by using a synthetic resin (phenolic resin, polyacrylonitrile (PAN), polyimide, furan resin, etc.), cellulosic fiber (paper, cotton fiber, etc.), composites thereof (paper-phenolic resin laminate, etc.), etc. as a raw material. Of these, carbonaceous activated carbon and activated carbon fiber are preferred, and more preferred are activated carbon derived from petroleum coke and activated carbon derived from paper-phenolic resin laminate.

The activated carbon may be one prepared from a carbonaceous feed material through alkali-activation after performing carbonization or directly without performing carbonization. In order to produce activated carbon having larger specific surface area and pore volume, it is preferable to perform alkali-activation treatment after carbonizing a carbonaceous feed material. As an alkali activator, various conventional chemicals such as hydroxides, e.g., potassium hydroxide and sodium hydroxide; and carbonates such as sodium carbonate and potassium carbonate, etc. can be used.

Although the specific surface area of activated carbon is not particularly limited, the specific surface area is preferably 1000 $m^2$/g or more from the viewpoint of securing a sufficient adsorption capacity or storage capacity, more preferably 1500 $m^2$/g or more, and even more preferably 2000 $m^2$/g or more. The upper limit of the specific surface area is not particularly limited, but the strength of activated carbon itself may decrease, and thus the specific surface area is preferably 4000 $m^2$/g or less, more preferably 3500 $m^2$/g or less, and even more preferably 3000 $m^2$/g or less. The pore volume of activated carbon is also not particularly limited, but from the same point of view, it is preferably 0.4 $cm^3$/g or more and more preferably 0.7 $cm^3$/g or more, and preferably 2.2 $cm^3$/g or less and more preferably 2.0 $cm^3$/g or less. The average pore diameter is preferably 3.0 nm or less and more preferably 2.5 nm or less, and preferably 1.6 nm or more and more preferably 1.7 nm or more. The specific surface area, the pore volume, and the average pore diameter are values based on the measuring methods disclosed in the Examples.

In the present invention, a polyolefin having an average particle diameter of 1 μm or more and 50 μm or less is used as a binder to be mixed with the above-mentioned activated carbon. As to the average particle diameter of a polyolefin resin, a cumulative frequency curve on volume basis is produced from measurement of the particle size distribution of the polyolefin resin measured by using a laser diffraction particle size distribution analyzer SALD-2000 (manufactured by Shimadzu Corporation), and the particle diameter at a cumulative frequency of 50% is taken as the average particle diameter.

Preferred as the polyolefin resin are polyethylene and polypropylene, and more preferred is polyethylene. The polyethylene may be any of high density polyethylene, low density polyethylene, linear low density polyethylene, and a polyethylene-based copolymer. Examples of the polyethylene-based copolymer include various copolymers known in the art, such as a copolymer of ethylene with vinyl acetate, a copolymer of ethylene with a methacrylate, a copolymer of ethylene with methacrylic acid, and an ionomer in which the foregoing copolymer is partly replaced with a metal salt. These may be used singly or in any combination thereof.

The average particle diameter of the polyolefin resin to be mixed with the activated carbon is 1 $\mu$m or more, preferably 5 $\mu$m or more, and more preferably 10 $\mu$m or more. On the other hand, since the number of contact points of the polyolefin resin with the activated carbon may decrease if being excessively large, the average particle diameter of the polyolefin resin is 50 $\mu$m or less, preferably 40 $\mu$m or less, and more preferably 30 $\mu$m or less.

In the present invention, while an activated carbon is mixed with a polyolefin resin having an average particle diameter of 1 to 50 $\mu$m, the content of the polyolefin resin is not particularly limited and may be appropriately adjusted so that a desired strength may be obtained. If the content of the polyolefin resin is increased, the strength of an activated carbon molded body can be made higher. Since the activated carbon itself may not be bound sufficiently if the content of the polyolefin resin is excessively small, the content of the polyolefin resin ([polyolefin resin content/(polyolefin resin content + activated carbon content) $\times$ 100]) is preferably 1% by mass or more, more preferably 3% by mass or more, even more preferably 8% by mass or more, and still even more preferably 10% by mass or more, more preferably, relative to the total of 100% by mass of the polyolefin resin and the activated carbon. On the other hand, if the content of the polyolefin resin is excessively large, the processability may deteriorate due to excessive increase in the strength of the activated carbon molded body. Moreover, the polyolefin resin itself does not have properties as activated carbon, and this serves as a factor for decrease in specific surface area or pore volume, and properties of the activated carbon molded body, such as adsorption performance or storage performance, may deteriorate. The content of the polyolefin resin is preferably 25% by mass or less, more preferably 20% by mass or less, and even more preferably 15% by mass or less, relative to the total of 100% by mass of the polyolefin resin and the activated carbon.

In the present invention, the above-mentioned mixture is molded by subjecting it to pressing treatment. The activated carbon molded body obtained by subjecting the mixture to the pressing treatment is large in pore volume, has an increased density, and also has a sufficient strength. As the method of pressing treatment, various pressing treatments known in the art can be employed, and preferred is uniaxial pressing treatment or isostatic pressing treatment, and more preferred is isostatic pressing treatment. In the case of having performed isostatic pressing treatment, it is believed that since the surface of the mixture can be pressed isobarically, voids in the molded body decrease, so that the molded body density increases and, at the same time, the fluidity of the activated carbon and a binder increases, points of contact of the activated carbon with the binder increase, and the strength increases more than in the case of uniaxial pressing treatment. Thus, the pore volume per molded body volume and the specific surface area per molded body volume can be further increased. In the case of having performed isostatic pressing treatment, it is possible to increase the strength at a lower treatment pressure than uniaxial pressing treatment. The isostatic pressing treatment is not particularly limited and should just be a method by which pressing molding can be performed in a non-directed fashion by adding uniform pressing force to the surface of the mixture. Examples of the isostatic pressing treatment include cold isostatic pressing treatment (CIP: Cold Isostatic Pressing), hydrostatic pressing treatment, rubber pressing treatment, and hot isostatic pressing treatment (HIP: Hot Isostatic Pressing); of these, preferred is cold isostatic pressing treatment (CIP), by which a three-dimensionally uniform pressure can be added at normal temperature. The cold isostatic pressing treatment may be either of a wet method or a dry method. The pressing medium may be any medium known in the art such as gas or liquid.

Although the treatment pressure applied during the pressing treatment is not particularly limited, a carbon substance itself cannot fully be bound and the strength of a resulting activated carbon molded body and the molded body density may not fully be increased if the pressure is excessively low. If the pressure is excessively high, pores may be damaged. Thus, the pressure is preferably 50 MPa or more, more preferably 100 MPa or more, and is preferably 200 MPa or less, more preferably 250 MPa or less, and even more preferably 300 MPa or less. The treatment time is not particularly limited. The dwell time is preferably 1 minute or more, and more preferably 5 minutes or more. On the other hand, the dwell time is preferably 60 minutes or less, and more preferably 30 minutes of less because the effects described above will be saturated.

The activated carbon molded body having resulted from the pressing treatment has been improved in strength. Although depending on the content of the polyolefin resin or pressing treatment conditions, the strength of the activated carbon molded body satisfying the above-mentioned preferred conditions is preferably 0.1 MPa or more, more preferably 0.2 MPa or more, even more preferably 0.5 MPa or more, still even more preferably 0.6 MPa or more, and most preferably 0.7 MPa or more. Since the activated carbon molded body of the present invention has sufficient strength, it does not break from friction during its handling or use. Moreover, the activated carbon molded body of the present invention can attain a high packing density and can have an increased adsorption efficiency or an increased storage capacity.

The specific surface area or the pore volume decreases if a binder is added, but use of an alkali-activated carbon makes it possible to maintain the specific surface area or the pore volume at a high value even if a binder is added. According to the manufacture method of the present invention, since the activated carbon molded body has a high molded body density, its pore volume per molded body volume and its specific surface area per molded body volume are large. The molded body density of the activated carbon molded body is not particularly limited and is preferably 0.3 g/cm$^3$ or more, more preferably 0.35 g/cm$^3$, and is preferably 1.2 g/cm$^3$ or less, more preferably 1.0 g/cm$^3$ or less,

even more preferably 0.6 g/cm$^3$ or less, and still even more preferably 0.55 g/cm$^3$ or less.

The pore volume per molded body volume is 0.39 cm$^3$/cm$^3$ or more, preferably 0.4 cm$^3$/cm$^3$ or more, and more preferably 0.42 cm$^3$/cm$^3$ or more. The pore volume per molded body volume is not particularly limited with respect to its upper limit and is preferably 1.0 cm$^3$/cm$^3$ or less, more preferably 0.75 cm$^3$/cm$^3$ or less, even more preferably 0.70 cm$^3$/cm$^3$ or less, and still even more preferably 0.65 cm$^3$/cm$^3$ or less. As described above, if the pore volume per molded body volume is within the above-mentioned range, the activated carbon molded body exhibits excellent properties with respect to adsorption properties or storage properties.

An activated carbon molded body that satisfies the specific surface area per molded body volume in addition to the pore volume per molded body volume exhibits more improved adsorption performance or storage performance in various applications, such as adsorption material or storage material. The specific surface area per molded body volume is preferably 810 m$^2$/cm$^3$ or more, more preferably 850 m$^2$/cm$^3$ or more, even more preferably 900 m$^2$/cm$^3$ or more, and is preferably 1650 m$^2$/cm$^3$ or less, more preferably 1300 m$^2$/cm$^3$ or less, even more preferably 1200 m$^2$/cm$^3$ or less, and still even more preferably 1150 m$^2$/cm$^3$ or less.

The size of the activated carbon molded body is not particularly limited, and it can appropriately be chosen according to an application. The shape to mold is also not particularly limited.

The activated carbon molded body resulted from the above-described pressing treatment may further be secondary molded into a desired shape such as a pellet shape, a plate-like shape, a briquette shape, and a spherical shape. The activated carbon molded body (including a secondary molded body) of the present invention can be used as an adsorption material or a storage material, for example. Examples of applications of the adsorption material include liquid phase applications such as water cleaning treatment, waste water treatment, and noble metal recovery treatment, and gas phase applications such as air purifying treatment, deodorization treatment, gas separation treatment, solvent recovery treatment, and exhaust gas treatment. Examples of the storage material include energy storage applications such as hydrogen and methane.

The present application claims benefit of the priority based on Japan Patent Application No. 2015-122814 filed on June 18, 2015. The disclosure of the specification of Japan Patent Application No. 2015-122814 is incorporated herein by reference in its entirety.

EXAMPLES

The present invention will be described in detail below by way of Examples, but the present invention is not limited by the following Examples, and modifications which do not depart from the spirit and scope of the present invention are allowed and embraced within the technical scope of the present invention.

Molded body 1

After adding potassium hydroxide in a mass ratio of 3.5 times to a carbonaceous feed material (petroleum coke) and mixing them, the mixture was heated to 800°C in a nitrogen atmosphere and was subjected to activation treatment for 2 hours. The resulting activated material was washed in order by hot water (60°C) washing, acid (hydrochloric acid) washing, and hot water (60°C) washing, and thus, activated carbon A, from which metal impurities have been removed, was obtained. A polyethylene (PE, average particle diameter: 30 μm) was added in such a manner that the content of the polyethylene would be 7.4% by mass based on the total of 100% by mass of the polyethylene and the activated carbon A, and thus a mixture was obtained. The resulting mixture was subjected to cold isostatic pressing treatment (CIP) and molded. Specifically, the mixture was packed and sealed in a nylon-polyethylene bag, and the bag was mounted to a hydrostatic pressure powder molding apparatus (manufactured by Nippon R&D Industry Co., Ltd.) and thereafter the pressure was raised to 200 MPa and held for 10 minutes, and thus the mixture was molded. The resulting molded body was dried in an oven at 150°C for 2 hours, and thus molded body 1 was obtained.

Molded body 2

Molded body 2 was obtained in the same manner as that for the molded body 1 except that the polyethylene was added in such a manner that the polyethylene would account for 9.2% by mass based on the total of 100% by mass of the polyethylene and the activated carbon A.

Molded body 3

Molded body 3 was obtained in the same manner as that for the molded body 1 except that the polyethylene was added in such a manner that the polyethylene would account for 16.7% by mass based on the total of 100% by mass of the polyethylene and the activated carbon A.

Molded body 4

Molded body 4 was obtained in the same manner for the molded body 1 except that the average particle diameter of the polyethylene used had been adjusted to 10 $\mu$m.

Molded body 5

After adding potassium hydroxide in a mass ratio of 2.5 times to a carbonized paper-phenolic resin laminate, activation treatment was performed at 800°C for 2 hours in a nitrogen atmosphere. The resulting activated material was washed in order by water washing (60°C hot water), acid (hydrochloric acid) washing, and water washing (60°C hot water) washing, and thus, activated carbon B, from which metal impurities have been removed, was obtained. A polyethylene (PE, average particle diameter: 30 $\mu$m) was added in such a manner that the polyethylene would account for 7.4% by mass based on the total of 100% by mass of the polyethylene and the activated carbon B, and thus a mixture was obtained. The resulting mixture was subjected to cold isostatic pressing treatment (CIP) in the same manner as for the molded body 1, and thus molded body 5 was obtained.

Molded body 6

Molded body 6 was obtained in the same manner as that for the molded body 5 except that the polyethylene was added in such a manner that the polyethylene would account for 9.1% by mass based on the total of 100% by mass of the polyethylene and the activated carbon B.

Molded body 7

Molded body 7 was obtained in the same manner as that for the molded body 5 except that the polyethylene was added in such a manner that the polyethylene would account for 16.7% by mass based on the total of 100% by mass of the polyethylene and the activated carbon B.

Molded body 8

Molded body 8 was obtained in the same manner for the molded body 5 except that the average particle diameter of the polyethylene used had been adjusted to 10 $\mu$m.

Molded body 9

Molded body 9 was obtained in the same manner as that for the molded body 1 except that the activated carbon A was changed to coconut shell-water vapor-activated carbon (produced by MC Evolve Technologies Corporation: Z10-28) and the polyethylene (PE, average particle diameter: 30 $\mu$m) was added in such a manner that the polyethylene would account for 2.9% by mass based on the total of 100% by mass of the polyethylene and the coconut shell-water vapor-activated carbon.

Molded body 10

Molded body 10 was obtained in the same manner as that for the molded body 9 except that the polyethylene was added in such a manner that the polyethylene would account for 4.8% by mass based on the total of 100% by mass of the polyethylene and the coconut shell-water vapor-activated carbon.

Molded body 11

Molded body 11 was obtained in the same manner as that for the molded body 9 except that the polyethylene was added in such a manner that the polyethylene would account for 9.1% by mass based on the total of 100% by mass of the polyethylene and the coconut shell-water vapor-activated carbon.

Molded body 12

Molded body 12 was manufactured in the same manner for the molded body 10 except that the average particle diameter of the polyethylene used had been adjusted to 10 $\mu$m.

Molded body 13

Molded body 13 was obtained by subjecting a mixture to cold isostatic pressing treatment (CIP) in the same manner as that for the molded body 5 except that the polyethylene was changed to a polytetrafluoroethylene powder (PTFE) and the polytetrafluoroethylene powder was added in such a manner the polytetrafluoroethylene would account for 7.4% by mass based on the total of 100% by mass of the polytetrafluoroethylene and the activated carbon B. The molded body 13 was very brittle and was not able to maintain its shape, and for this reason, its strength, etc. were not able to be measured.

Molded body 14

Molded body 14 was obtained in the same manner as that for the molded body 13 except that the polytetrafluoroethylene was added in such a manner that the polytetrafluoroethylene would account for 16.7% by mass based on the total of 100% by mass of the polytetrafluoroethylene and the activated carbon B. The molded body 14 was very brittle and was not able to maintain its shape, and for this reason, its strength, etc. were not able to be measured.

Molded body 15

A mixture was obtained in the same manner for the molded body 5 except that the average particle diameter of the polyethylene used had been adjusted to 10 $\mu$m. The resulting mixture was filled into a mold (phi: 19.85mm, height: 24.69 mm, actually effective height: 17.60 mm), pressed (uniaxially) with a hand presser, and held at 200 MPa for 10 minutes, and then dried in an oven at 150°C for 2 hours, and thus molded body 15 was obtained.

Molded body 16

Molded body 16 was obtained by subjecting a mixture prepared in the same manner as that for the molded body 13 to uniaxial pressing treatment in the same manner as that for the molded body 15. The molded body 16 was very brittle and was not able to maintain its shape, and for this reason, its strength, etc. were not able to be measured.
The molded body density, specific surface area, total pore volume, average pore diameter, and strength of each molded body were measured by the following methods and shown in Table 1.

<Molded body density>

A rectangular parallellepiped solid block (1 cm long, 1 cm wide and 1 cm thick) was cut out of a molded body, and a molded body density was calculated by the following formula from the mass (g) and the volume ($cm^3$) of the block.

$$\text{Molded body density } (g/cm^3) = \text{mass } (g) \,/\, \text{volume } (cm^3)$$

<Specific surface area>

After vacuum heating 0.2 g of a molded body at 250°C, a nitrogen adsorption isotherm was produced using a nitrogen adsorber (manufactured by Micromeritics Instrument Corporation; ASAP-2400) and a specific surface area ($m^2$/g) was calculated by the BET method.

<Total pore volume>

From the above-mentioned nitrogen adsorption isotherm, the nitrogen adsorption at a relative pressure (p/p0) of 0.93 was determined as the total pore volume ($cm^3$/g).

<Average Pore Diameter>

Assuming that the pores of an activated carbon were cylindrical in shape, an average pore diameter was calculated by the following formula.

$$\text{Average pore diameter (nm)} = 4 \times (\text{total pore volume})/(\text{specific surface area}) \times 1000$$

<Pore volume per molded body volume>

$$\text{Pore volume per molded body volume (cm}^3/\text{cm}^3) = [\text{total pore volume (cm}^3/\text{g})] \times [\text{molded body density (g/cm}^3)]$$

<Specific surface area per molded body volume>

$$\text{Specific surface area per molded body volume (m}^2/\text{cm}^3) = [\text{specific surface area (m}^2/\text{g})] \times [\text{molded body density (g/cm}^3)]$$

<Strength test>

A specimen prepared by cutting a molded body into 1 cm cube was subjected to strength measurement using a tensilon universal tester (manufactured by ORENTEC: RTC-1325A) at a test rate of 1 mm/min until the specimen fractured. By dividing the value of the maximum load when fracture occurred by the cross-sectional area of the specimen, strength was calculated. The strength is rated as pass when being 0.1 MPa or more.

[Table 1]

| | Molded body | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|---|
| Activated carbon | Carbonaceous feed material | | Petroleum coke | | | | Carbonized paper-phenolic laminate | | | | Coconut shell | | | | Carbonized paper-phenolic laminate | | | |
| | Activation method | | Alkali | | | | Alkali | | | | Water vapor | | | | Alkali | | | |
| Binder | Species | | PE | PE | PE | PE | PE | PE | PE | PE | PE | PE | PE | PE | PTFE | PTFE | PE | PTFE |
| | Average particle diameter | μm | 30 | 30 | 30 | 10 | 30 | 30 | 30 | 10 | 30 | 30 | 30 | 10 | - | - | 10 | - |
| | Content | % by mass | 7.4 | 9.2 | 16.7 | 7.4 | 7.4 | 9.1 | 16.7 | 7.4 | 2.9 | 4.8 | 9.1 | 4.8 | 7.4 | 16.7 | 7.4 | 7.4 |

| Molded body | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| Activated carbon | Carbonaceous feed material | Petroleum coke | | | | Carbonized paper-phenolic laminate | | | | Coconut shell | | | | Carbonized paper-phenolic laminate | | | |
| | Activation method | Alkali | | | | Alkali | | | | Water vapor | | | | Alkali | | | |
| Molded body characteristics | Molding method  - | CIP | CIP | CIP | CIP | CIP | CIP | CIP | CIP | CIP | CIP | CIP | CIP | CIP | CIP | Uniaxial | Uniaxial |
| | Presence/absence of  ○, × molding | ○ | ○ | ○ | ○ | ○ | ○ | ○ | ○ | ○ | ○ | ○ | ○ | × | × | ○ | × |
| | Bulk density  g/cm$^3$ | 0.37 | 0.37 | 0.38 | 0.43 | 0.48 | 0.48 | 0.51 | 0.50 | 0.73 | 0.81 | 0.83 | 0.83 | - | - | 0.48 | - |
| | Specific surface area  m$^2$/g | 2760 | 2600 | 2340 | 2660 | 2010 | 1970 | 1693 | 1920 | 970 | 950 | 870 | 970 | - | - | 2010 | - |
| | Total pore volume  cm$^3$/g | 1.52 | 1.43 | 1.28 | 1.46 | 0.93 | 0.91 | 0.78 | 0.89 | 0.45 | 0.45 | 0.41 | 0.45 | - | - | 0.93 | - |
| | Average pore diameter  nm | 2.20 | 2.20 | 2.19 | 2.20 | 1.84 | 1.84 | 1.84 | 1.84 | 1.87 | 1.88 | 1.87 | 1.87 | - | - | 1.84 | - |
| | Pore volume per molded body volume  cm$^3$/cm$^3$ | 0.56 | 0.53 | 0.49 | 0.63 | 0.44 | 0.43 | 0.40 | 0.44 | 0.33 | 0.36 | 0.34 | 0.38 | - | - | 0.45 | - |
| | Specific surface area per molded body volume  m$^2$/cm$^3$ | 1012.9 | 962.7 | 887.8 | 1148.9 | 965.6 | 937.0 | 859.2 | 957.7 | 706.4 | 765.2 | 717.9 | 803.9 | - | - | 970.0 | - |
| | Strength  MPa | 0.17 | 0.28 | 1.3 | 0.5 | 0.37 | 0.64 | 1.84 | 1.21 | 0.76 | 1.84 | 5.29 | 1.76 | - | - | 0.56 | - |

EP 3 311 912 A1

Table 1 shows that the molded bodies 1 to 8, and 15, which meet the requirements of the present invention, were larger in pore volume per molded body volume. In comparison of the molded body 1 (7.4% by mass), the molded body 2 (9.2% by mass), and the molded body 3 (16.7% by mass), which differ only in binder content, the total pore volume and the specific surface area decreased as the binder content increased, but the pore volume per molded body volume and the specific surface area per molded body volume were large. The same tendency was exhibited also for the molded body 5 (7.4% by mass), the molded body 6 (9.1% by mass), and the molded body 7 (16.7% by mass).

In comparison of the molded bodies 1 to 4, using petroleum coke as a carbonaceous feed material, with the molded bodies 5 to 8, using carbonized paper-phenolic resin laminate, the molded bodies 1 to 4 were larger in pore volume per molded body volume and specific surface area per molded body volume.

On the other hand, the molded bodies 9 to 12, using water vapor-activated carbon, were larger in molded body density, but smaller in specific surface area and pore volume and smaller in pore volume per molded body volume and specific surface area per molded body volume as compared with the molded bodies 1 to 8, using alkali-activated carbon.

The molded bodies 13, 14, and 16, where are examples of using polytetrafluoroethylene (PTFE) as a binder, were all low in strength and broke into powder, and activated carbon molded bodies were not obtained therefrom.

The molded body 15 is an example of performing uniaxial pressing treatment as a molding method and had a pore volume per molded body volume and a specific surface area per molded body volume approximately equal to those of the molded body 8.

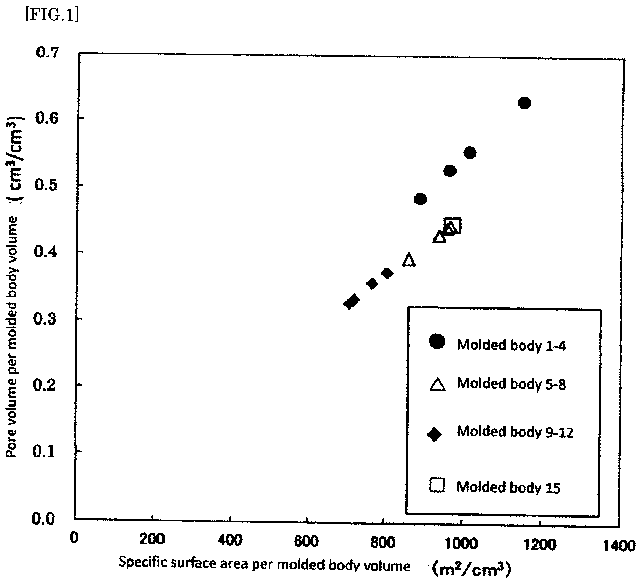

In the graph, the relationship of the pore volume per molded body volume and the specific surface area per molded body volume is plotted (Fig. 1) for the molded bodies 1 to 4 (● in the figure), the molded bodies 5 to 8 (△ in the figure), the molded bodies 9 to 12 (♦ in the figure), and the molded body 15 (□ in the figure).

The molded bodies 1 to 8 and 15 meeting the requirements of the present invention as shown in Fig. 1 were larger in pore volume per molded body volume and specific surface area per molded body volume than the molded bodies 9 to 12. In addition, the molded bodies 1 to 4 using petroleum coke, were larger in pore volume per molded body volume and specific surface area per molded body volume than the molded bodies 5 to 8 using carbonized paper-phenolic resin laminate.

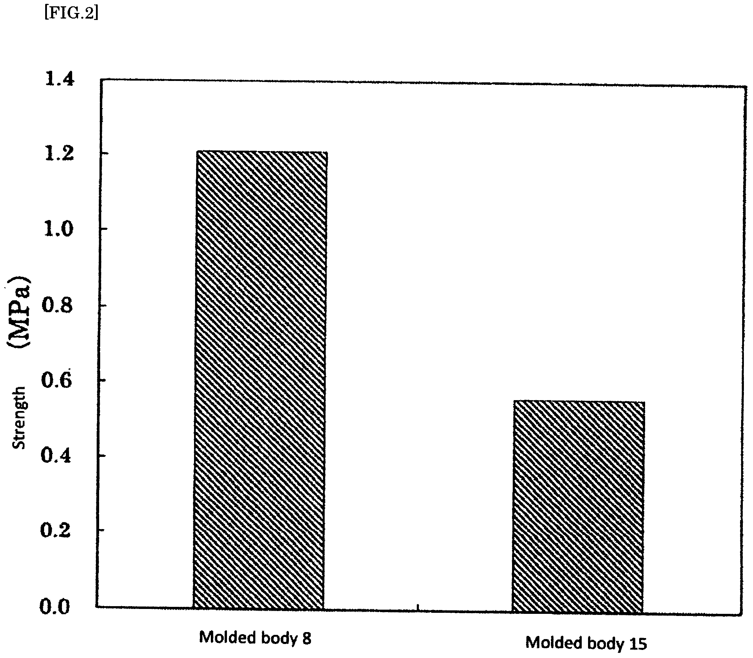

The strengths of the molded bodies 8 and 15 prepared by molding alkali-activated carbon under the same conditions except the molding methods are shown in a graph (Fig. 2). The molded body 8 prepared by cold isostatic pressing treatment (CIP) and the molded body 15 prepared by uniaxial pressing treatment were approximately equal in the properties other than strength as shown in Table 1, but the molded body 8 was twice or more higher in strength than the molded body 15.

**Claims**

1.  An activated carbon molded body **characterized in that**
    a pore volume per molded body volume ($cm^3/cm^3$) obtained from the product of a total pore volume ($cm^3/g$) of the activated carbon molded body and a molded body density ($g/cm^3$) is 0.39 $cm^3/cm^3$ or more, and
    a strength of the activated carbon molded body is 0.1 MPa or more.

2.  The activated carbon molded body according to claim 1, wherein
    a specific surface area per molded body volume ($m^2/cm^3$) obtained from the product of a specific surface area ($m^2/g$) of the activated carbon molded body and the molded body density ($g/cm^3$) is 810 $m^2/cm^3$ or more.

3.  The activated carbon molded body according to claim 1 or 2, wherein
    the activated carbon molded body contains an alkali activated carbon and a polyolefin resin.

4.  The activated carbon molded body according to claim 3, wherein
    the activated carbon molded body contains the polyolefin resin in a content of 1% by mass or more and 25% by mass or less relative to the total of 100% by mass of the polyolefin resin and the activated carbon.

5.  An adsorption material using the carbon molded body according to any one of claims 1 to 4.

6.  A storage material using the carbon molded body according to any one of claims 1 to 4.

7.  An activated carbon molded body **characterized in that** the activated carbon molded body is obtained by mixing an activated carbon obtained by subjecting a carbonaceous feed material to alkali-activation treatment with a polyolefin resin having an average particle diameter of 1 $\mu$m or more and 50 $\mu$m or less, and then subjecting the mixture obtained to pressing treatment.

**8.** The activated carbon molded body according to claim 7, wherein the pressing treatment is an isostatic pressing treatment.

**9.** The activated carbon molded body according to claim 7 or 8, wherein the activated carbon molded body contains the polyolefin resin in a content of 1% by mass or more and 25% by mass or less relative to the total of 100% by mass of the polyolefin resin and the activated carbon.

**10.** A method for manufacturing an activated carbon body **characterized in** mixing an activated carbon obtained by subjecting a carbonaceous feed material to alkali-activation treatment with a polyolefin resin having an average particle diameter of 1 $\mu$m or more and 50 $\mu$m or less, and then subjecting the mixture obtained to pressing treatment.

**11.** The method for manufacturing an activated carbon body according to claim 10, wherein the pressing treatment is an isostatic pressing treatment.

[FIG.1]

[FIG.2]

EP 3 311 912 A1

EP 3 311 912 A1

# INTERNATIONAL SEARCH REPORT

International application No.

PCT/JP2016/067867

## A. CLASSIFICATION OF SUBJECT MATTER

*C01B31/14*(2006.01)i, *B01J20/20*(2006.01)i, *B01J20/28*(2006.01)i, *B01J20/30*(2006.01)i, *C01B31/12*(2006.01)i, *F17C11/00*(2006.01)n

According to International Patent Classification (IPC) or to both national classification and IPC

## B. FIELDS SEARCHED

Minimum documentation searched (classification system followed by classification symbols)
C01B31/00-31/36, B01J20/20, B01J20/28, B01J20/30, F17C11/00

Documentation searched other than minimum documentation to the extent that such documents are included in the fields searched
Jitsuyo Shinan Koho     1922-1996    Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)
JSTPlus(JDreamIII)

## C. DOCUMENTS CONSIDERED TO BE RELEVANT

| Category* | Citation of document, with indication, where appropriate, of the relevant passages | Relevant to claim No. |
|---|---|---|
| X<br>Y | WO 2013/191269 A1 (Kuraray Chemical Co., Ltd.),<br>27 December 2013 (27.12.2013),<br>claims; paragraphs [0036], [0040], [0044], [0047]<br>& US 2015/0190781 A1<br>claims; paragraphs [0042], [0051], [0054]<br>& EP 2865769 A1      & KR 10-2015-0028305 A<br>& CN 104685075 A | 1-5,7-10<br>1-11 |
| X<br>Y<br>A | JP 2001-287905 A (Tokyo Gas Co., Ltd.),<br>16 October 2001 (16.10.2001),<br>claims; examples<br>(Family: none) | 1,2,5,6<br>6<br>3,4,7-11 |

[×] Further documents are listed in the continuation of Box C.      [ ] See patent family annex.

| | |
|---|---|
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>06 July 2016 (06.07.16) | Date of mailing of the international search report<br>19 July 2016 (19.07.16) |
|---|---|
| Name and mailing address of the ISA/<br>   Japan Patent Office<br>   3-4-3,Kasumigaseki,Chiyoda-ku,<br>   Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2016/067867

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2000-263040 A  (Kuraray Chemical Co., Ltd.), 26 September 2000 (26.09.2000), claims; paragraphs [0007], [0010], [0011] (Family: none) | 1-11 |
| Y | JP 2011-521775 A  (3M Innovative Properties Co.), 28 July 2011 (28.07.2011), claims; examples; paragraphs [0023], [0031]; table 1 & US 2011/0042298 A1 claims; examples; paragraphs [0037], [0045] & WO 2009/140033 A2     & CN 102026720 A | 1-11 |
| Y | JP 2005-119902 A  (Kuraray Chemical Co., Ltd.), 12 May 2005 (12.05.2005), examples; paragraph [0017] (Family: none) | 1-11 |
| Y | JP 9-86912 A  (Suzuki Motor Corp.), 31 March 1997 (31.03.1997), claims; paragraphs [0002], [0020] (Family: none) | 11 |
| Y | JP 2001-130905 A  (Kyocera Corp.), 15 May 2001 (15.05.2001), paragraph [0034] (Family: none) | 11 |

Form PCT/ISA/210 (continuation of second sheet) (January 2015)

**EP 3 311 912 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003038953 A
- JP 2000263040 A
- JP 2005119902 A
- JP 2015122814 A